# EUROPEAN PATENT APPLICATION

(11) **EP 4 657 767 A1**
(43) Date of publication of application: **03.12.2025**
(21) Application number: 23922403.3
(22) Date of filing: 16.11.2023
(51) Int. Cl.: H04B 7/06

(54) **INFORMATION TRANSMISSION METHOD, SWITCHING METHOD, APPARATUS, AND STORAGE MEDIUM**

(30) Priority: 16.02.2023 CN 202310166349
(71) Applicant: ZTE Corporation, Shenzhen, Guangdong 518057 (CN)
(72) Inventor: NIU, Li, Shenzhen, Guangdong 518057 (CN); GAO, Yuan, Shenzhen, Guangdong 518057 (CN); LU, Ting, Shenzhen, Guangdong 518057 (CN); SHA, Xiubin, Shenzhen, Guangdong 518057 (CN)
(74) Representative: Vossius & Partner Patentanwälte Rechtsanwälte mbB
(86) International application number: PCT/CN2023/132123
(87) International publication number: WO 2024/169287

(57) **Abstract**

Provided are an information transmission method, a switching method, an apparatus, and a storage medium. The information transmission method comprises: determining antenna port adjustment information of a first node; and sending the antenna port adjustment information to a second node.

## Description

The present application claims priority to Chinese Patent Application No. 202310166349.1, filed on February 16, 2023, which is hereby incorporated by reference in its entirety.

### TECHNICAL FIELD

The present disclosure relates to the technical field of communications, and in particular, to an information transmission method, a switching method, an apparatus, and a storage medium.

### BACKGROUND

With the rapid development of the communication technologies, the demand for a number of antennas is also increasing. For example, in fifth generation (5G) communication, the application of beamforming or the application of large-scale distributed antennas both impose a high demand for the number of antennas.

### SUMMARY

In an aspect, there is provided an information transmission method in embodiments of the present disclosure, which is applied to a first node. The method includes:
determining antenna port adjustment information of the first node; and
sending the antenna port adjustment information to a second node.

In another aspect, there is provided an information transmission method in the embodiments of the present disclosure, which is applied to a second node. The method includes:
receiving antenna port adjustment information sent from a first node.

In yet another aspect, there is provided an information transmission method in the embodiments of the present disclosure, which is applied to a third node. The method includes:
receiving an auxiliary message of a first node, where the auxiliary message includes antenna port-related information of the first node.

In yet another aspect, there is provided a switching method in the embodiments of the present disclosure, which is applied to a fourth node, and a source cell accessed by the fourth node enables discontinuous reception/discontinuous transmission (DRX/DTX). The method includes:
in response to that a first switching condition is met, switching, by the fourth node, from the source cell to a target cell.

In yet another aspect, there is provided a communication apparatus in the embodiments of the present disclosure. The communication apparatus includes:
a processing module, configured to determine antenna port adjustment information of a first node; and
a communication module, configured to send the antenna port adjustment information to a second node.

In yet another aspect, there is provided a communication apparatus in the embodiments of the present disclosure. The communication apparatus includes:
a communication module, configured to receive antenna port adjustment information sent from a first node.

In yet another aspect, there is provided a communication apparatus in the embodiments of the present disclosure. The communication apparatus includes:
a communication module, configured to receive an auxiliary message of a first node, where the auxiliary message includes antenna port-related information of the first node.

In yet another aspect, there is provided a communication apparatus in the embodiments of the present disclosure. The communication apparatus includes:
a processing module, configured to switch from a source cell to a target cell in response to that a first switching condition is met.

In yet another aspect, there is provided a communication apparatus in the embodiments of the present disclosure. The communication apparatus includes: a memory and a processor; where the memory and the processor are coupled; the memory is configured to store instructions executable for the processor; the processor, upon executing the instructions, enables the communication apparatus to implement the method according to any one of the above-mentioned aspects.

In yet another aspect, there is provided a computer-readable storage medium in the embodiments of the present disclosure. The computer-readable storage medium stores computer program instructions, and in response to that the computer program instructions are executed by a processor, the method according to any one of the above-mentioned aspects is implemented.

In yet another aspect, there is provided a computer program product in the embodiments of the present disclosure. The computer program product includes computer program instructions, and in response to that the computer program instructions are executed by a computer, the computer implements the method according to any one of the above-mentioned aspects.

### BRIEF DESCRIPTION OF THE DRAWINGS

In order to describe the technical solutions in the present disclosure more clearly, accompanying drawings needed to be used in some embodiments of the present disclosure will be introduced briefly below. Obviously, the accompanying drawings described below are merely accompanying drawings of some embodiments of the present disclosure, and an ordinary person of those skilled in the art may obtain other accompanying drawings according to these accompanying drawings.
FIG. 1 is a schematic diagram of an architecture of a communication system according to some embodiments.
FIG. 2 is a flowchart of an information transmission method according to some embodiments.
FIG. 3 is a flowchart of another information transmission method according to some embodiments.
FIG. 4 is a flowchart of yet another information transmission method according to some embodiments.
FIG. 5 is a flowchart of yet another information transmission method according to some embodiments.
FIG. 6 is a structural schematic diagram of a communication apparatus according to some embodiments.
FIG. 7 is a structural schematic diagram of another communication apparatus according to some embodiments.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

It should be noted that in the present disclosure, wordings such as "exemplarily" or "for example" are used to indicate examples, illustrations, or clarifications. Any embodiment or design solution described in the present disclosure with wordings such as "exemplarily" or "for example" should not be illustrated as more preferred or advantageous embodiment or design solution over other embodiments or design solutions. Specifically, the usage of the wordings such as "exemplarily" or "for example" is intended to present relevant concepts in a concrete way.

Hereinafter, terms such as "first" and "second" are used for descriptive purposes only and are not to be understood as indicating or implying the relative importance or implicitly indicating the number of indicated technical features. Thus, features limited with "first" , "second", etc., may explicitly or implicitly include one or more of the features.

In the description of the present disclosure, unless otherwise specified, "/" means an "or" relationship, for example, "A/B" may represent A or B. The term "and/or" in the description is merely a relevant relationship for describing related objects, which represents that there may be three relationships. For example, A and/or B may represent: only A; only B; or both A and B. In addition, a wording "at least one" represents a number of one or more, and "a plurality of" represents a number more than two.

In some technologies, with the rapid development of the communication technologies, demands for a number of antennas are increasing. For example, in the fifth generation (5G) communication, the application of beamforming or the application of large-scale distributed antennas both impose a high demand for the number of antennas. However, activating a larger number of antennas may result in higher network power consumption, thus leading to higher communication costs.

In order to reduce network power consumption during a process of communication, an antenna may usually be dynamically activated or deactivated according to a network load. For example, in a case where the network load is light, some antennas may be deactivated to implement power consumption reduction. As another example, in a case where the network load is heavy, more antennas may be activated to improve a service quality for a user.

However, activating or deactivating an antenna may also affect an antenna port corresponding to the antenna. For example, if an antenna is deactivated, the antenna port corresponding to the antenna may also be deactivated or a transmission power may be decreased. Accordingly, an accuracy of the measurement result of other devices on the antenna port may be changed.

For example, when a base station configures a CSI-RS (Channel State Information Reference Signal) resource through an RRC (Radio Resource Control) signaling, the base station configures a number of antenna ports for sending a CSI-RS signal. When the base station increases the number of antenna ports, if the terminal still performs measurement according to the configured number of antenna ports, the terminal may not measure the increased antenna ports. When the base station reduces the number of antenna ports, if the terminal still performs measurement according to the configured number of antenna ports, the terminal may measure the deactivated or power-reduced antenna ports. The terminal may filter measurement values of the deactivated or power-reduced antenna ports with measurement values of other antenna ports, causing the measurement result to be lower than an actual result.

Thus, an information transmission method is provided in the embodiments of the present disclosure, and the method includes: determining antenna port adjustment information of a first node; and sending the antenna port adjustment information to a second node. Based on this, the antenna port adjustment information of the first node may be informed to the second node, so as to improve the accuracy of the measurement performed by the second node for antenna port(s) of the first node, thereby improving the communication quality.

The information transmission method provided in the embodiments of the present disclosure may be applied to systems in various communication standards. For example, the method provided in the embodiments of the present disclosure may be applicable to systems, including but not limited to, a long term evolution (LTE) system, various versions based on LTE advanced, a 5G system, and a new radio (NR), or other next generation communication systems. In addition, the method provided in the embodiments of the present disclosure may further be applicable to future-oriented communication technologies, etc.

A network architecture of a communication network in the embodiments of the present disclosure may include a network-side device (for example, including but not limited to a base station) and a receiving-side device (for example, including but not limited to a terminal). And it should be understood that, in this example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. In a case where two communication nodes perform device-to-device communication, both the first communication node and the second communication node may be base stations or terminals. The first communication node and the second communication node may be referred to as the first node and the second node for short, respectively.

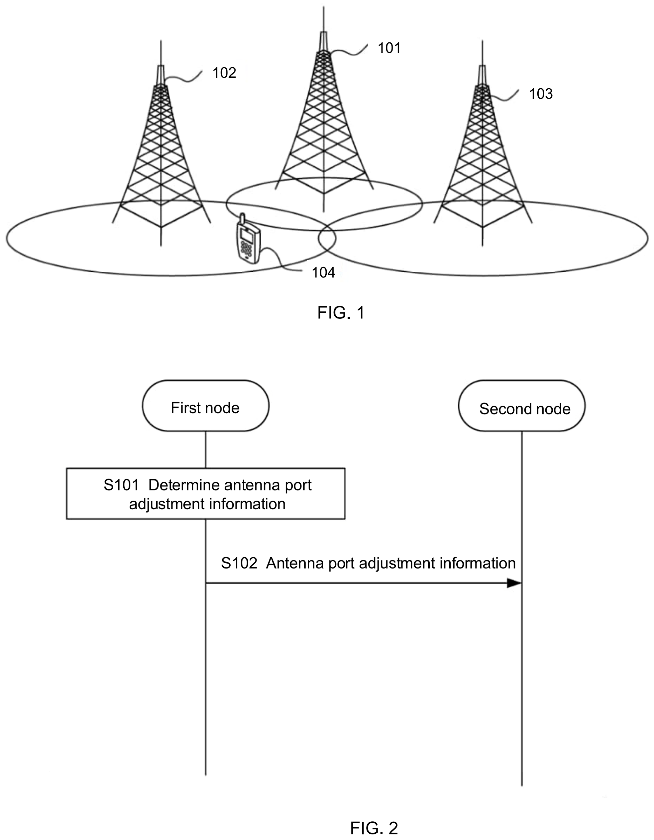

Exemplarily, taking a network-side device being a base station and a receiving-side device as being a terminal as an example, FIG. 1 shows a schematic diagram of an architecture of a communication system. Referring to FIG. 1, a communication system 100 may include, but is not limited to: a base station (e.g., a first base station 101, a second base station 102, and a third base station 103 shown in FIG. 1) and a terminal (e.g., a terminal 104 shown in FIG. 1).

The base station may be a wireless access point (AP), or the base station may also be an evolved Node Base Station (eNB), or the base station may further be a base station in a fifth generation mobile communication technology (5G) network, which is not limited in the embodiments of the present disclosure.

The terminal 104 is also referred to as a user equipment (UE). The terminal 104 may be a handheld device, a vehicle-mounted device, a wearable device, a computer, a smart home device, or a smart office device with various communication functions, which is not limited in the embodiments of the present disclosure. For example, the handheld device may be a smartphone. The vehicle-mounted device may be a vehicle-mounted navigation system. The wearable device may be a smart bracelet, a phone watch, etc. The computer may be a personal digital assistant (PDA) computer, a tablet computer, or a laptop computer. The smart home device may be a smart curtain, or a smart water meter. The smart office device may be a smart printer. A form of the terminal is not limited in the embodiments of the present disclosure.

In addition, the above-mentioned communication system may also have other names (e.g., the communication system may also be referred to as a communication network, a network system, a network architecture or a communication architecture, etc.), and the above-mentioned communication system may also include other possible network structures (e.g., a core network element, etc.), which is not limited in the embodiments of the present disclosure.

It should be understood that, the above-mentioned communication system is merely intended to illustrate the technical solutions of the embodiments of the present disclosure more clearly, and does not constitute a limitation on the embodiments of the present disclosure. A person of ordinary skill in the art may appreciate that with the evolution of network architecture and the emergence of new service scenarios, the technical solutions provided in the embodiments of the present disclosure are also applicable to similar technical problems.

In order to illustrate the technical solutions provided in the embodiments of the present disclosure more clearly, the information transmission method provided in the embodiments of the present disclosure will be illustrated below.

FIG. 2 is an information transmission method according to some embodiments. Referring to FIG. 2, the method includes S101 to S102.

In S101, a first node determines antenna port adjustment information of the first node itself.

The antenna port adjustment information is used to indicate an adjustment case of an antenna port. For example, the adjustment case includes adjustment for a quantity of antenna ports to be activated and adjustment for a transmission power of the antenna port, which is not limited herein.

In some embodiments, the antenna port adjustment information is used to indicate a quantity of antenna ports to be activated by adjustment. Based on this, as an example, the antenna port adjustment information may include a quantity of antenna ports to be activated or an index of the quantity of antenna ports to be activated.

In some embodiments, the antenna port adjustment information is used to indicate an adjustment number of antenna ports (i.e., an increased quantity, the number of antenna ports to be deactivated, or the number of antenna ports whose power is to be adjusted).

Based on this, as an example, the antenna port adjustment information may include the adjustment number of the antenna ports and first indication information. The first indication information is used to indicate whether the adjustment number is an increased quantity or a decreased quantity.

As another example, the antenna port adjustment information includes the first indication information and an index of the adjustment number of antenna ports.

As another example, the antenna port adjustment information includes second indication information of a plurality of antenna ports, second indication information of an antenna port is used to indicate a state of the antenna port, and the state of the antenna port includes a normal state or a deactivated state.

As another example, the antenna port adjustment information includes third indication information and second indication information of the plurality of antenna ports, and the third indication information and second indication information of an antenna port are used to jointly indicate a state of the antenna port. The state of the antenna port includes a normal state, a power adjustment state, or a deactivated state.

In some embodiments, the antenna port adjustment information is further used to indicate a power adjustment case of an antenna port. Based on this, as an example, the third indication information is further used to indicate a power adjustment degree of an antenna port in the power adjustment state. Exemplarily, in a case where the power adjustment state is a power decreased state, the power adjustment degree is a power decreased degree; or in a case where the power adjustment state is a power increased state, the power adjustment degree is a power increased degree.

In S102, the first node sends the antenna port adjustment information to the second node; correspondingly, the second node receives the antenna port adjustment information sent from the first node.

In some embodiments, the second node has at least one of the following capabilities:
supporting that an antenna port changes dynamically;
supporting that an antenna port is deactivated;
supporting that an antenna port power is decreased;
supporting to be notified that an antenna port changes;
supporting to receive a media access control control element (MAC CE) or control information for carrying the antenna port adjustment information; or
supporting to update a measurement process according to a number of antenna ports.

In some embodiments, the antenna port adjustment information may be carried in the control information or MAC CE. Exemplarily, in a case where the first node is a base station and the second node is a terminal, the control information may be downlink control information (DCI).

Compared with an RRC signaling or a system message, a transmission latency of the MAC CE or DCI is shorter. Therefore, in a case where the antenna port adjustment information is sent through the MAC CE or DCI, a delay in the second node receiving the antenna port adjustment information is short, which is conducive to the second node making corresponding adjustment (such as adjusting a measurement result for the antenna port, etc.) according to the antenna port adjustment information in time, thereby improving the communication quality.

In some embodiments, the antenna port adjustment information may be broadcast through a system message or pre-configured through a radio resource control (RRC) signaling by the first node.

Further, the first node may send enabling information (i.e., fourth indication information hereinafter) of the antenna port adjustment information to the second node through the MAC CE or control information, to activate the antenna port adjustment information pre-configured by the second node. Alternatively, the first node may send other indication information for invoking the antenna port adjustment information to the second node through the MAC CE or control information, so that the second node makes corresponding adjustment according to the pre-configured antenna port adjustment information.

In some embodiments, before S102, the first node may further configure a scenario of supporting antenna port adjustment through an RRC signaling or may broadcast the scenario of supporting antenna port adjustment through a system message. For example, the first node may configure a scenario in which the number of antenna ports changes through the RRC signaling or may enable the scenario in which the number of antenna ports changes through the system message.

In the embodiments of the present disclosure, in a case where the first node adjusts an antenna port or is about to adjust the antenna port, the second node may be informed of the antenna port adjustment information of the first node, thereby improving the accuracy of a result of the measurement performed by the second node on the antenna port, and further improving the communication quality.

Exemplarily, taking the first node being a base station and the second node being a terminal as an example, in a case where the base station adjusts its own antenna port (e.g., increasing a number of antenna ports), if the terminal still performs measurement according to the pre-configured number of antenna ports, the terminal does not measure the increased antenna ports; as another example, in a case where the base station decreases the number of antenna ports, if the terminal still performs measurement according to the pre-configured number of antenna ports, the terminal may additionally measure deactivated or power-reduced antenna ports. Therefore, the base station may send antenna port adjustment information to the terminal, for example, may send an MAC CE or DCI carrying antenna port adjustment information to the terminal, so that the terminal adjusts the measurement on the antenna port, thereby improving the accuracy of a measurement result, and further improving the communication quality.

The following is an exemplary illustration for different implementations of the antenna port adjustment information.

Case 1-1: the antenna port adjustment information includes a quantity of antenna ports to be activated.

In some embodiments, the quantity of antenna ports to be activated may be any one of the following: 1, 2, 4, 16, 24, or 32. It should be understood that, the quantity of antenna ports to be activated may also include other numbers, which is not limited in the present disclosure.

In an example, taking an MAC CE carrying antenna port adjustment information as an example, referring to Table 1, the MAC CE may include: a cell identifier, the quantity of antenna ports to be activated, and a reserved bit (the reserved bit is represented by R in Table 1). In an example, the quantity of antenna ports to be activated occupies 5 bits, and the cell identifier occupies 5 bits.

**Table 1**

| R | R | R | Cell Identifier |
|---|---|---|---|
| R | R | R | Quantity of antenna ports to be activated |

In this way, the second node may learn about an adjustment case of the antenna ports by the first node (i.e., learning about a quantity of antenna ports deactivated by the first node) according to the number of antenna ports to be activated by the first node previously and a quantity of antenna ports to be activated specified in the antenna port adjustment information.

Case 1-2: the antenna port adjustment information includes an index of the quantity of antenna ports to be activated.

In some embodiments, an index of the quantity of antenna ports to be activated corresponds to a quantity of antenna ports to be activated. For example, in a case where the index of the quantity of antenna ports to be activated is 1, it may indicate that the quantity of antenna ports to be activated is 1; in a case where the index of the quantity of antenna ports to be activated is 2, it may indicate that the quantity of antenna ports to be activated is 2; in a case where the index of the quantity of antenna ports to be activated is 3, it may indicate that the quantity of antenna ports to be activated is 4; in a case where the index of the quantity of antenna ports to be activated is 4, it may indicate that the quantity of antenna ports to be activated is 16; in a case where the index of the quantity of antenna ports to be activated is 5, it may indicate that the quantity of antenna ports to be activated is 24; in a case where the index of the quantity of antenna ports to be activated is 6, it may indicate that the quantity of antenna ports to be activated is 32.

It should be understood that, the corresponding relationship between the index of the quantity of antenna ports to be activated and the quantity of antenna ports to be activated is merely an example, which is not limited in the present disclosure.

In some embodiments, the corresponding relationship between the index of the quantity of antenna ports to be activated and the quantity of antenna ports to be activated may be pre-configured in the second node.

In some embodiments, the corresponding relationship between the index of the quantity of antenna ports to be activated and the quantity of antenna ports to be activated is broadcast to the second node through a system message, or configured for the second node through an RRC signaling by the first node. Exemplarily, the first node may configure through an RRC signaling, or broadcast through a system message, a supported first antenna port number list. The first antenna port number list is used to indicate a corresponding relationship between an index of a quantity of antenna ports to be activated and the quantity of antenna ports to be activated.

In some embodiments, after the second node acquires the index of the quantity of antenna ports to be activated, the quantity of antenna ports to be activated of the first node may be determined according to the corresponding relationship between the index of the quantity of antenna ports to be activated and the quantity of antenna ports to be activated.

In an example, taking the MAC CE carrying antenna port adjustment information as an example, referring to Table 2, a structure of the MAC CE may include: a cell identifier, and an index of a quantity of antenna ports to be activated.

**Table 2**

| | |
|---|---|
| Cell Identifier | Index of a quantity of antenna ports to be activated |

Case 1-3: the antenna port adjustment information includes an adjustment number of the antenna ports and the first indication information.

In some embodiments, the adjustment number of antenna ports may be an increased quantity or a decreased quantity of the antenna ports activated by the first node. Alternatively, the adjustment number of antenna ports may also be an increased quantity or a decreased quantity of the antenna ports deactivated by the first node. The present disclosure does not limit thereto.

In some embodiments, the adjustment number of antenna ports defaults to an increased quantity or a decreased quantity of the antenna ports activated by the first node.

In some embodiments, the first indication information is used to indicate whether the adjustment number is an increased quantity or a decreased quantity. Exemplarily, the first indication information takes a first value, indicating that the adjustment number of antenna ports is an increased quantity of antenna ports activated by the first node; the first indication information takes a second value, indicating that the adjustment number of antenna ports is a decreased quantity of the antenna ports activated by the first node.

In some embodiments, the adjustment number of antenna ports may be any one of the following: 1, 2, 4, 16, 24, or 32. It should be understood that, the adjustment number of antenna ports may also include other numbers, which is not limited in the present disclosure.

In some embodiments, the first node configures a maximum number of antenna ports supported by the first node through an RRC signaling, or may broadcast the maximum number of antenna ports supported by the first node through a system message.

In an example, taking an MAC CE carrying the antenna port adjustment information as an example, referring to Table 3, a structure of MAC CE may include: a cell identifier, first indication information, an adjustment number of antenna ports, and a reserved bit (the reserved bit is represented by R in Table 3). In an example, in the structure of the MAC CE shown in Table 3 below, the adjustment number of antenna ports occupies 5 bits, the cell identifier occupies 5 bits, and the first indication information occupies 1 bit.

**Table 3**

| R | R | R | Cell Identifier |
|---|---|---|---|
| R | R | First indication information | Adjustment number of antenna ports |

In this way, the second node may learn the number of antenna ports to be increased or decreased from the antenna port adjustment information. The second node determines the quantity of antenna ports after adjustment based on the previously configured or notified quantity of antenna ports to be activated and the increased or decreased quantity of antenna ports indicated by the antenna port adjustment information.

Case 1-4: the antenna port adjustment information includes an index of the adjustment number of antenna ports and the first indication information. Description for the first indication information may refer to the description for case 1-3 above, which are not repeated herein.

In some embodiments, the index of the adjustment number of antenna ports corresponds to an adjustment number of antenna ports.

In some embodiments, a corresponding relationship between the index of the adjustment number of antenna ports and the adjustment number of antenna ports may be pre-configured in the second node.

In some embodiments, the corresponding relationship between the index of the adjustment number of antenna ports and the adjustment number of antenna ports is broadcast to the second node through a system message, or configured for the second node through an RRC signaling by the first node. Exemplarily, the first node may configure a supported second antenna port number list through an RRC signaling, or may broadcast the supported first antenna port number list through a system message. The second antenna port number list is used to indicate a corresponding relationship between an index of the adjustment number of antenna ports and the adjustment number of antenna ports.

In some embodiments, after the second node acquires the index of the adjustment number of antenna ports, the adjustment number of antenna ports of the first node may be determined according to the corresponding relationship between the index of the adjustment number of antenna ports and the adjustment number of antenna ports.

Case 1-5: the antenna port adjustment information includes second indication information of a plurality of antenna ports.

In some embodiments, second indication information of an antenna port is used to indicate a state of the antenna port, where the state of the antenna port includes a normal state or a deactivated state.

As an example, there is a corresponding relationship between the second indication information and the state of the antenna port. For example, the second indication information of the antenna port takes a third value, indicating that the state of the antenna port is a normal state; the second indication information of the antenna port takes a fourth value, indicating that the state of the antenna port is a deactivated state.

In some embodiments, the first node configures a first state list of an antenna port through an RRC signaling or broadcasts the first state list of an antenna port through a system message, and the first state list is used to indicate a corresponding relationship between a value of the second indication information and the state of the antenna port.

Exemplarily, taking an MAC CE carrying antenna port adjustment information as an example, referring to Table 4, a structure of an MAC CE may include: a cell identifier, second indication information of the plurality of antenna ports, and a reserved bit.

**Table 4**

| | | |
|---|---|---|
| Cell Identifier | Second indication information of a plurality of antenna ports | Reserved Bit |

In some examples, taking an MAC CE carrying the second indication information of 32 antenna ports as an example, referring to Table 5, a structure of the MAC CE may include: a cell identifier, second indication information of the 32 antenna ports, and a reserved bit. The reserved bit is represented by R in Table 4, and port1 to port32 are used to represent the second indication information of the 32 antenna ports.

**Table 5**

| R | R | R | Cell Identifier | | | | |
|---|---|---|---|---|---|---|---|
| port1 | port2 | port3 | port4 | port5 | port6 | port7 | port8 |
| port9 | port10 | port11 | port12 | port13 | port14 | port15 | port16 |
| port17 | port18 | port19 | port20 | port21 | port22 | port23 | port24 |
| port25 | port26 | port27 | port28 | port29 | port30 | port31 | port32 |

In an example, in the structure of MAC CE shown in Table 5 above, the second indication information of 32 antenna ports occupies 32 bits, second indication information of each antenna port occupies 1 bit; and the cell identifier occupies 5 bits.

In an example, if port1 is "1", a state of an antenna port corresponding to port1 is a normal state; if port1 is "0", a state of an antenna port corresponding to port1 is a deactivated state, and so on, which are not repeated herein.

In some embodiments, the first node may further configure a maximum of a number of antenna ports supported by the first node through an RRC signaling or broadcast the maximum of a number of antenna ports supported by the first node through a system message. Correspondingly, in a case where the second node receives the maximum of a number of antenna ports supported by the first node, a maximum number of bits occupied by the second indication information of the plurality of antenna ports, or a size of the MAC CE or DCI carrying the second indication information of the plurality of antenna ports may be determined, according to the maximum of the number of antenna ports supported by the first node.

Case 1-6: the antenna port adjustment information includes third indication information and the second indication information of the plurality of antenna ports.

In some embodiments, the third indication information and the second indication information of the antenna port are used to jointly indicate a state of an antenna port, where the state of the antenna port includes a normal state, a power adjustment state, or a deactivated state.

As an example, there is a corresponding relationship between the third indication information and the second indication information of the antenna port with the state of the antenna port. For example, in a case where the second indication information of the antenna port is shown as "0", the antenna port is in an activated state. Alternatively, in a case where the second indication information of the antenna port is shown as "1" and the third indication information is "0", the antenna port is in a deactivated state. Alternatively, in a case where the second indication information of the antenna port is shown as "1" and the third indication information is shown as "1", the antenna port is in a power adjustment state, for example, a power of the antenna port is decreased.

It should be understood that a joint indication mode of the third indication information and the second indication information of the antenna port is only an example. Those skilled in the art may easily imagine that there may be other joint indication modes, as long as three different states of the antenna ports are capable of being indicated. Furthermore, if the antenna port has other possible states, a newly added state may be indicated by adding new indication information, which is not limited in the present disclosure.

In some embodiments, the first node may configure a second state list of an antenna port through an RRC signaling or broadcast the second state list of an antenna port through a system message, and the second state list is used to indicate a corresponding relationship between the third indication information, the second indication information of the antenna port with a state of the antenna port.

In some examples, taking an MAC CE carrying antenna port adjustment information as an example, referring to Table 6, a structure of the MAC CE may include: a cell identifier, third indication information, second indication information of 32 antenna ports, and a reserved bit. The reserved bit is represented by R in Table 6, port1 to port32 in Table 6 are used to represent the second indication information of the 32 antenna ports, and "flag" in Table 6 is used to represent the third indication information.

**Table 6**

| R | R | flag | Cell Identifier | | | | |
|---|---|---|---|---|---|---|---|
| port1 | port2 | port3 | port4 | port5 | port6 | port7 | port8 |
| port9 | port10 | port11 | port12 | port13 | port14 | port15 | port16 |
| port17 | port18 | port19 | port20 | port21 | port22 | port23 | port24 |
| port25 | port26 | port27 | port28 | port29 | port30 | port31 | port32 |

In an example, in the structure of the MAC CE shown in Table 6 above, the second indication information of 32 antenna ports occupies 32 bits. Second indication information of each antenna port occupies 1 bit; the cell identifier occupies 5 bits, and the third indication bit occupies 1 bit.

In an example, if port1 takes a value of "1" and flag takes a value of "0", a state of an antenna port corresponding to port1 is in a deactivated state; if port1 takes a value of "1" and flag takes a value of "1", a state of an antenna port corresponding to port1 is in a power adjustment state; if port1 takes a value of "0", a state of an antenna port corresponding to port1 is a normal state, and so on, which are not repeated herein.

In some embodiments, the third indication information is further used to indicate a power decreased degree of an antenna port in the power adjustment state. For example, there may be a mapping relationship between a value of the third indication information and the power decreased degree of the antenna port in the power adjustment state.

In some embodiments, the first node may configure a third state list of an antenna port through an RRC signaling or broadcast the third state list of an antenna port through a system message, where the third state list is used to indicate a corresponding relationship between the third indication information and a power decreased degree of an antenna port in the power adjustment state.

In some embodiments, after the second node receives the third state list, the second node may determine a number of bits of the third indication information according to the third state list. For example, if the third state list includes 4 power decreased degrees of antenna ports, the third indication information at least includes 2 bits; if the third state list includes 16 power decreased degrees of antenna ports, the third indication information at least includes 4 bits, and so on, which are not repeated herein.

In some embodiments, the third indication information at least includes 2 bits. Exemplarily, taking the third indication information including 2 bits as an example, in a case where the second indication information of a certain antenna port takes a value of "1" and the third indication information takes a value of "00", the state of the antenna port is in a deactivated state. As another example, in a case where the second indication information of the antenna port takes a value of "1" and the third indication information takes a value of "10", a state of the antenna port is a state where a power is decreased by 1/2. As another example, in a case where the second indication information of the antenna port takes a value of "1" and the third indication information takes a value of " 01", a state of the antenna port is a state where a power is decreased by 1/4.

It should be understood that, the value of the third indication information mentioned above is merely an example, merely a case where the third indication information includes 2 bits is shown in the present disclosure. It can be conceivable that, in a case where the third indication information includes more bits (also referred to as bits), a number of power decreased degrees that the third indication information may indicate is also more, which is not limited in the present disclosure.

In some examples, taking an MAC CE carrying the third indication information and the second indication information of 32 antenna ports, and the third indication information being used to indicate a power decreased degree of an antenna port in the power adjustment state as an example, referring to Table 7, a structure of the MAC CE may include: a cell identifier, the third indication information, the second indication information of the 32 antenna ports, and a reserved bit. The reserved bit is represented by R in Table 7, port1 to port32 in Table 7 are used to represent the second indication information of the 32 antenna ports, and "flag" in Table 7 is used to represent the third indication information.

**Table 7**

| R | flag | | Cell Identifier | | | | |
|---|---|---|---|---|---|---|---|
| port1 | port2 | port3 | port4 | port5 | port6 | port7 | port8 |
| port9 | port10 | port11 | port12 | port13 | port14 | port15 | port16 |
| port17 | port18 | port19 | port20 | port21 | port22 | port23 | port24 |
| port25 | port26 | port27 | port28 | port29 | port30 | port31 | port32 |

In an example, in the structure of the MAC CE shown in Table 7 above, the second indication information of 32 antenna ports occupies 32 bits. Second indication information of each antenna port occupies 1 bit; a cell identifier occupies 5 bits; and the third indication bit occupies at least 2 bits.

It should be understood that, the antenna port adjustment information may further include other contents, for example, a power of an antenna port, etc., and contents included in the antenna port adjustment information may be added or deleted according to user's requirements, which is not limited to in the present disclosure.

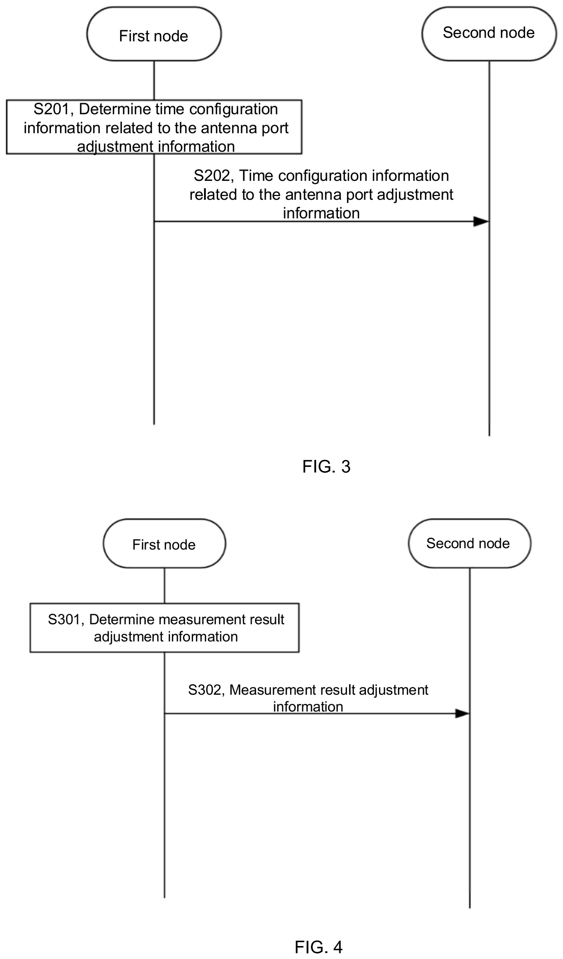

In some embodiments, in order to achieve control over the effective status of the antenna port adjustment information, as shown in FIG. 3, the information transmission method further includes S201 to S202.

In S201, the first node determines time configuration information related to the antenna port adjustment information.

In some embodiments, the time configuration information includes at least one of:
a duration, or an index of the duration;
a start time, or an index of the start time;
a first time offset value for determining the start time, or an index of the first time offset value;
a period, or an index of the period;
a time information index value, where the time information index value corresponds to a set of time parameters, and the set of time parameters includes at least one of the duration, the start time, the first time offset value, or the period.

In some embodiments, the time configuration information further includes a cell identifier.

In S202, the first node sends the time configuration information related to the antenna port adjustment information to the second node; correspondingly, the second node receives the time configuration information related to the antenna port adjustment information.

In some embodiments, the time configuration information related to the antenna port adjustment information may be carried in control information or an MAC CE. In some examples, the control information at least includes DCI.

Exemplarily, the time configuration information related to the antenna port adjustment information may be carried in an MAC CE or DCI. It should be understood that, in a case where the antenna port adjustment information is sent through an MAC CE or DCI, a delay in the second node receiving the time configuration information is relatively short, which is conducive to the second node making corresponding adjustment (such as adjusting a measurement result for the antenna port, etc.) according to the antenna port adjustment information in time, thereby improving the communication quality.

The following is an exemplary illustration for different implementations of the time configuration information.

Case 2-1: the time configuration information includes a duration.

In some embodiments, the duration is used to indicate the effective duration of the antenna port adjustment information. Exemplarily, a time unit of the duration may be in millisecond level, tens of milliseconds level, or hundreds of milliseconds level, or may further be in any other possible levels, which is not limited in the present disclosure.

In some embodiments, a time unit of the duration may be broadcast through a system message, or configured through an RRC signaling by the first node. In some other embodiments, a time unit of the duration may also be pre-defined by the second node, which is not limited in the present disclosure. Based on this, only a value of the duration may be carried in the MAC CE or control information, which saves a transmission overhead of the time unit, and improves a transmission rate of the duration.

In an example, the duration is 5, and a time unit of the duration is 10 ms. In this case, the effective duration of the antenna port adjustment information may be 50 ms.

Exemplarily, taking an MAC CE carrying the time configuration information as an example, referring to Table 8, a structure of an MAC CE includes: a cell identifier and a duration. In some examples, a structure of the MAC CE further includes a reserved bit (the reserved bit is represented by R in Table 8).

**Table 8**

| R | Cell Identifier | |
|---|---|---|
| Duration | | |

In an example, referring to the structure of the MAC CE in Table 8, the cell identifier occupies 5 bits and the duration occupies 10 bits.

Case 2-2: the time configuration information includes an index of the duration.

Description of duration and the time unit of duration may refer to the description in case 2-1, which are not repeated herein.

In some embodiments, the index of the duration corresponds to a duration.

In some embodiments, the first node configures a value list of the duration through an RRC signaling or broadcasts the value list of the duration through a system message. The value list of the duration is used to indicate a corresponding relationship between an index of the duration and the duration.

In some embodiments, the corresponding relationship between the index of the duration and the duration may be pre-configured in the second node. For example, the value list of the duration may be pre-configured in the second node.

In some embodiments, after the second node receives the index of the duration, the second node may select a corresponding duration from the value list of the duration according to the index of the duration.

Exemplarily, taking an MAC CE carrying the time configuration information as an example, referring to Table 9, a structure of an MAC CE at least may include: a cell identifier and an index of the duration. In some examples, the structure of the MAC CE further includes a reserved bit (the reserved bit is represented by R in Table 9).

**Table 9**

| R | Cell Identifier | |
|---|---|---|
| Index of duration | | |

In an example, referring to the structure of the MAC CE in Table 9, the cell identifier occupies 5 bits.

It should be understood that, in a case where a number of values of the duration is less than a maximum value of the duration, a number of bits occupied by the index of the duration is generally less than a number of bits occupied by a value of the duration. In this case, the time configuration information includes an index of the duration instead of the duration, which may reduce the transmission overhead.

Case 2-3: the time configuration information includes a start time.

In some embodiments, the start time is used to indicate an initial time of the first node adjusting an antenna port (e.g., increasing or decreasing a number of antenna ports), or an effective duration of the antenna port adjustment information of the first node.

In some embodiments, the time unit of the start time may be in millisecond level, tens of milliseconds level, or hundreds of milliseconds level, or may further be in any other possible levels, which is not limited in the present disclosure.

In some embodiments, the time unit of the start time may be configured by the first node through an RRC signaling or system message broadcasting. In some other embodiments, the time unit of the start time may further be pre-defined by the second node, which is not limited in the present disclosure. Based on this, only a value of the start time may be carried in the MAC CE or control information, which saves a transmission overhead of the time unit, and improves a data transmission rate.

In some embodiments, the start time is an absolute time. Exemplarily, the start time may be a certain time. For example, the start time may be a time when the second node receives the time configuration information or a time when the second node receives the antenna port adjustment information.

In some other embodiments, the start time is a relative time. For example, the start time may be a time determined according to a certain time (such as the time when the second node receives the time configuration information or the time when the antenna port adjustment information is received) and an offset value (such as the first time offset value), which may, for example, refer to the description in case 2-5, and are not repeated herein.

Exemplarily, taking an MAC CE carrying the time configuration information as an example, referring to Table 10, a structure of MAC CE includes: a cell identifier and a start time. In some examples, a structure of the MAC CE may further include a reserved bit (the reserved bit is represented by R in Table 10).

**Table 10**

| | | |
|---|---|---|
| R | Cell Identifier | Start time |

In an example, referring to the structure of the MAC CE in Table 10, the cell identifier occupies 5 bits and the start time occupies 2 bits. It should be understood that, the cell identifier or the start time may also occupy bits of other digits, which are not limited in the embodiments of the present disclosure.

Case 2-4: the time configuration information includes an index of the start time.

Description of start time and the time unit of start time may refer to the description in case 2-3, which are not repeated herein.

In some embodiments, an index of a start time corresponds to a start time.

In some embodiments, the first node configures a value list of the start time through an RRC signaling or broadcasts the value list of the start time through a system message, the value list of the start time is used to indicate a corresponding relationship between an index of the start time and the index.

In some embodiments, the corresponding relationship between the index of the start time and the start time may be pre-configured in the second node. For example, the value list of the start time may be pre-configured in the second node.

In some embodiments, after the second node receives the index of the start time, the second node may select a corresponding start time from the value list of the start time according to the index of the start time.

Exemplarily, taking an MAC CE carrying the time configuration information as an example, referring to Table 11, a structure of an MAC CE may at least include: a cell identifier and an index of a start time. In some examples, the structure of the MAC CE may further include a reserved bit (the reserved bit is represented by R in Table 11).

**Table 11**

| | | |
|---|---|---|
| R | Cell Identifier | Index of start time |

In an example, referring to the structure of the MAC CE in Table 11, the cell identifier occupies 5 bits.

It should be understood that, in a case where a number of values of the start time is less than a maximum value of the start time, a number of bits occupied by the index of the start time is generally less than a number of bits occupied by a value of the start time. In this case, the time configuration information includes an index of the start time instead of the start time, which may reduce the transmission overhead.

Case 2-5: the time configuration information includes a first time offset value for determining a start time.

Description of start time and the time unit of start time may refer to the description in case 2-3. A time unit of the first time offset value may refer to a configuration mode of the time unit of the start time. For example, in a case where a value indicated by the first time offset value is 5, and the time unit of the first time offset value is 1 ms, the first time offset value is 5 ms, and so on, which are not repeated herein.

In some embodiments, the start time and the first time offset value satisfy the following relationship: the start time is equal to a time when the second node receives the MAC CE or control information plus the first time offset value. For example, the start time may be equal to a time obtained by adding the first time offset value to a time when the second node receives the MAC CE or control information carrying the time configuration information. As another example, the start time may be equal to a time obtained by adding the first time offset value to a time when the second node receives the MAC CE or control information carrying the antenna port adjustment information.

In some embodiments, the start time and the first time offset value satisfy the following relationship: the start time is equal to a time when the MAC CE or control information received by the second node takes effect plus the first time offset value. For example, the start time may be equal to a time obtained by adding the first time offset value to a time when the MAC CE or control information carrying the time configuration information received by the second node takes effect. As another example, the start time may be equal to a time obtained by adding the first time offset value to a time when the MAC CE or control information carrying the antenna port adjustment information received by the second node takes effect.

Exemplarily, taking an MAC CE carrying the time configuration information as an example, referring to Table 12, a structure of MAC CE includes: a cell identifier and a first time offset value for determining a start time. In some examples, the structure of the MAC CE may also include a reserved bit (the reserved bit is represented by R in Table 12).

**Table 12**

| | | |
|---|---|---|
| R | Cell Identifier | First time offset value |

In an example, referring to the structure of the MAC CE in Table 12, the cell identifier occupies 5 bits and the first time offset value occupies 2 bits. It should be understood that, the cell identifier or the first time offset value may also occupy bits of other digits, which are not limited in the embodiments of the present disclosure.

Case 2-6: the time configuration information includes an index of a first time offset value for determining a start time.

Relevant description of the start time and the time unit of the start time may refer to the description in case 2-3, relevant description of the first time offset value may refer to the description in case 2-5, which are not repeated herein.

In some embodiments, an index of a first time offset value corresponds to a first time offset value.

In some embodiments, a corresponding relationship between an index of a first time offset value and the first time offset value may be pre-configured in the second node. For example, a value list of the first time offset value may be pre-configured in the second node, where the value list of the first time offset value is used to indicate a corresponding relationship between an index of the first time offset value and the first time offset value.

In some embodiments, the corresponding relationship between the index of the first time offset value and the first time offset value may be configured by the first node through an RRC signaling or system message broadcasting. Exemplarily, the first node may configure a value list of the first time offset value through an RRC signaling, or may broadcast the value list of the first time offset value through a system message.

In some embodiments, after the second node acquires the index of the first time offset value, the second node may select a corresponding first time offset value from the value list of the first time offset value according to the index of the first time offset value.

Exemplarily, taking an MAC CE carrying the time configuration information as an example, referring to Table 13, a structure of MAC CE may at least include: a cell identifier and an index of a first time offset value. In some examples, the structure of the MAC CE may further include a reserved bit (the reserved bit is represented by R in Table 13).

**Table 13**

| | | |
|---|---|---|
| R | Cell Identifier | Index of a first time offset value |

In an example, referring to the structure of the MAC CE in Table 13, the cell identifier occupies 5 bits.

It should be understood that, in a case where a number of values of the first time offset value is less than a maximum value of the first time offset value, a number of bits occupied by the index of the first time offset value is generally less than a number of bits occupied by a value of the first time offset value. In this case, the time configuration information includes an index of the first time offset value instead of the first time offset value, which may reduce the transmission overhead.

Case 2-7: the time configuration information includes a period.

In some embodiments, the period in the time configuration information is a period for the first node to adjust an antenna port (e.g., increasing or decreasing a number of antenna ports); or a period for the antenna port adjustment information of the first node.

In some embodiments, a time unit of the period may be in millisecond level, tens of milliseconds level, or hundreds of milliseconds level, or may further be in any other possible levels, which is not limited in the present disclosure.

In some embodiments, the time unit of the period may be configured by the first node through an RRC signaling or system message broadcasting. Alternatively, the time unit of the period may also be pre-defined by the second node, which is not limited in the embodiments of the present disclosure.

Based on this, only a value of the period may be carried in an MAC CE or control information, thereby saving the transmission overhead of the time unit of the period, and improving the data transmission rate.

In an example, a value indicated by the period is 5, and a time unit of the period is 10 ms. In this case, an effective duration of the antenna port adjustment information may be 50 ms.

In some embodiments, a start time in each period may be determined according to the period and at least one of the start time or the index of the start time, the duration or the index of the duration, the first time offset value, or the first time offset value.

Exemplarily, taking an MAC CE carrying the time configuration information as an example, referring to Table 14, a structure of MAC CE includes: a cell identifier and a period. In some examples, the structure of the MAC CE may further include a reserved bit (the reserved bit is represented by R in Table 14).

**Table 14**

| | | |
|---|---|---|
| R | Cell Identifier | Period |

As an example, in the structure of the MAC CE in Table 14, the cell identifier occupies 5 bits and the period occupies 2 bits. It should be understood that, the cell identifier or the period may also occupy bits of other digits, which are not limited in the embodiments of the present disclosure.

Case 2-8: the time configuration information includes an index of a period.

Description of the period and the time unit of period may refer to the description in case 2-7, which are not repeated herein.

In some embodiments, an index of a period corresponds to a period.

In some embodiments, a corresponding relationship between the index of the period and the period may be pre-configured in the second node. For example, a value list of a period may be pre-configured in the second node, where the value list of the period is used to indicate a corresponding relationship between an index of the period and the period.

In some embodiments, the corresponding relationship between the index of the period and the period may be configured by the first node through RRC signaling or system message broadcasting. Exemplarily, the first node may configure a value list of the period through an RRC signaling, or may broadcast the value list of the period through a system message.

In some embodiments, after the second node acquires the index of the period, the second node may select a corresponding period from the value list of a period according to the index of the period.

Exemplarily, taking an MAC CE carrying the time configuration information as an example, referring to Table 15, a structure of MAC CE may at least include: a cell identifier and an index of a period. In some examples, the structure of the MAC CE may further include a reserved bit (the reserved bit is represented by R in Table 15).

**Table 15**

| | | |
|---|---|---|
| R | Cell Identifier | Index of period |

In an example, referring to the structure of the MAC CE in Table 15, the cell identifier occupies 5 bits.

It should be understood that, in a case where a number of values of the period is less than a maximum value of the period, a number of bits occupied by the index of the period is generally less than a number of bits occupied by a value of the period. In this case, the time configuration information includes an index of the period instead of the period, which may reduce the transmission overhead.

Case 2-9: the time configuration information includes a time information index value.

In some embodiments, there is a corresponding relationship between the time information index value and a set of time parameters. Exemplarily, the time information index value corresponds to a set of time parameters.

In some embodiments, a set of time parameters includes at least one of a duration, an index of a duration, a start time, an index of a start time, a first time offset value, an index of a first time offset value, a period, and an index of a period.

In some embodiments, the corresponding relationship between the time information index value and a time parameter may be pre-configured in the second node. For example, a value list of a time parameter may be pre-configured in the second node, and the value list of the time parameter is used to indicate a corresponding relationship between the time information index value and the time parameter.

In some embodiments, the corresponding relationship between the time information index value and the time parameter may be configured by the first node through an RRC signaling or system message broadcasting. For example, the first node may configure a value list of a time parameter through an RRC signaling, or may broadcast the value list of the time parameter through a system message.

In some embodiments, after the second node receives the time information index value, the second node acquires a time parameter corresponding to the time index value according to the value list of the time parameter. Furthermore, the second node may determine the effective status of the antenna port adjustment information (e.g., a start time, a duration, a period, etc., in each period) according to the acquired time parameter.

In some embodiments, if the time parameter includes a start time, and the start time is an absolute time, then in a case where the second node receives information indicating that an antenna port of the first node changes, the second node considers that the time configuration information (for example, a value list of a time parameter, etc.) broadcast through a system message or pre-configured through an RRC signaling by the first node takes effect. Furthermore, the second node may determine the effective status of the antenna port adjustment information (e.g., a start time, a duration, a period, etc., in each period) according to the time configuration information.

In other embodiments, if the time parameter includes a start time, and the start time is a relative time, then in a case where the second node receives information indicating a change in an antenna port of the first node, the second node considers that the time configuration information (for example, a value list of a time parameter, etc.) broadcast through a system message or pre-configured through RRC signaling by the first node takes effect. Further, the second node may determine a start time (e.g., a start time in each period, etc.) of the effective duration of the antenna port adjustment information according to the time configuration information and a time when the MAC CE or control information is received; or the second node may determine the effective status of the antenna port adjustment information (e.g., a start time, a duration, a period, etc., in each period) according to the time configuration information and a time when the received MAC CE or control information takes effect.

Exemplarily, taking an MAC CE carrying time configuration information as an example, referring to Table 16, a structure of an MAC CE may at least include: a cell identifier and a time information index value. In some examples, the structure of the MAC CE may further include a reserved bit (the reserved bit is represented by R in Table 16). In an example, referring to the structure of the MAC CE in Table 16, the cell identifier occupies 5 bits and the time information index value occupies 2 bits.

**Table 16**

| | | |
|---|---|---|
| R | Cell Identifier | Time information index value |

It should be noted that the solutions described in the above cases 2-1 to 2-9 are only examples, and structures of the MAC CE or control information shown in the above cases 2-1 to 2-9 may further be freely combined.

In some examples, the structure of the MAC CE or control information carrying the time configuration information includes at least: a duration, a start time, and a period.

Exemplarily, taking an MAC CE as an example, referring to Table 17, a structure of the MAC CE includes: a cell identifier, a duration, a start time, a period, and a reserved bit (the reserved bit is represented by R in Table 17). In an example, the cell identifier occupies 5 bits, the start time occupies 2 bits, the period occupies 3 bits, and the duration occupies 5 bits.

**Table 17**

| | | | |
|---|---|---|---|
| R | Cell Identifier | | Start time |
| Period | | Duration | |

In some examples, the structure of the MAC CE or control information carrying the time configuration information includes at least: a duration, a first time offset value, and a period.

Exemplarily, taking an MAC CE as an example, referring to Table 18, a structure of MAC CE includes: a cell identifier, a duration, a first time offset value, a period and a reserved bit (the reserved bit is represented by R in Table 18). In an example, still referring to the structure of the MAC CE in Table 18, the cell identifier occupies 5 bits, the first time offset value occupies 2 bits, the period occupies 3 bits, and the duration occupies 5 bits.

**Table 18**

| | | | |
|---|---|---|---|
| R | Cell Identifier | | First time offset value |
| Period | | Duration | |

It should be understood that the time configuration information related to the antenna port adjustment information may further include other contents, and contents included in the time configuration information may be added or deleted according to user's requirements, which is not limited to in the present disclosure.

It can be seen that the effective status of the antenna port adjustment information may be indicated based on the time configuration information in the embodiments of the present disclosure. Therefore, after a time when an antenna port of the first node changes ends, that is, after the antenna port of the first node returns to an original state, the antenna port adjustment information also becomes invalid, so that the second node also makes corresponding adjustment, thereby improving the communication quality between the first node and the second node.

In some embodiments, the first node may send fourth indication information to the second node, where the fourth indication information is used to indicate to enable the antenna port adjustment information; correspondingly, the second node receives the fourth indication information. As an example, the fourth indication information may be carried in an MAC CE or control information (e.g., DCI). As an example, in the case where a plurality of pieces of antenna port adjustment information are pre-configured, the fourth indication information may further include an identifier of the antenna port adjustment information to be enabled.

Exemplarily, referring to Table 19, a structure of an MAC CE carrying the fourth indication information may at least include: a cell identifier and the fourth indication information. In some examples, the structure of the MAC CE may further include a reserved bit (the reserved bit is represented by R in Table 19). Referring to the structure of the MAC CE in Table 19, the cell identifier occupies 5 bits and the fourth indication information occupies 1 bit.

**Table 19**

| | | | |
|---|---|---|---|
| R | R | Cell Identifier | Fourth indication information |

In some embodiments, the first node may send fifth indication information to the second node, where the fifth indication information is used to disable the antenna port adjustment information; correspondingly, the second node receives the fifth indication information. As an example, the fifth indication information may be carried in an MAC CE or control information (e.g., DCI). As an example, in the case where a plurality of pieces of antenna port adjustment information are pre-configured, the fifth indication information may further include an identifier of the antenna port adjustment information to be disabled.

Exemplarily, referring to Table 20, a structure of an MAC CE carrying the fifth indication information may include: a cell identifier and the fifth indication information. In some examples, a structure of the MAC CE may further include a reserved bit (the reserved bit is represented by R in Table 20). Referring to the structure of the MAC CE in Table 20, the cell identifier occupies 5 bits and the fifth indication information occupies 1 bit.

**Table 20**

| | | | |
|---|---|---|---|
| R | R | Cell Identifier | Fifth indication information |

In the embodiments of the present disclosure, the antenna port adjustment information may be directly enabled or disabled through indication information (e.g., the fourth indication information or the fifth indication information), so as to control the effective status of the antenna port adjustment information.

In some embodiments, the first node may further send sixth indication information; the sixth indication information is used to activate reporting for a measurement report, and the sixth indication information includes a number of antenna ports related to the measurement report or an index of the number. Correspondingly, in a case where the sixth indication information is received, the second node may report a measurement report on an antenna port according to the sixth indication information. It should be understood that, contents reported by the second node may be referred to as a measurement report, or may also be referred to as a measurement result, which is not limited in the present disclosure and are not repeated below.

In some embodiments, the number of antenna ports related to the measurement report may include a number of all antenna ports, or may only include a number of a portion of antenna ports. In an example, a number of antenna ports related to the measurement report is {4, 8, 16}. Further, after the second node receives the number of antenna ports related to the measurement report, measurement results on the 4 antenna ports, on the 8 antenna ports, and on the 16 antenna ports are reported.

In some embodiments, there is a corresponding relationship between an index of the number of antenna ports related to the measurement report and the number of antenna ports related to the measurement report. In some examples, the first node may configure the corresponding relationship for the second node through an RRC signaling, or broadcast the corresponding relationship to the second node through a system message. Furthermore, the second node may determine the number of antenna ports related to the measurement report according to the corresponding relationship and an index of the number of antenna ports related to the measurement report.

In an example, cases of the number of antenna ports related to the measurement report configured by the first node through the RRC signaling includes {4, 8, 16}, and may use a 2-bit index to indicate to enable 4 antenna ports, 8 antenna ports, or 16 antenna ports. For example, in a case where the index is 01, it indicates that the first node enables 4 antenna ports, in a case where the index is 10, it indicates that the first node enables 8 antenna ports, and in a case where the index is 11, it indicates that the first node enables 16 antenna ports. Correspondingly, the second node reports a measurement report on the antenna ports enabled by the first node according to the index.

In an example, cases of the number of antenna ports related to the measurement report configured by the first node through the RRC signaling includes {4, 8, 16}, and a 1-bit index may be used to indicate whether these three cases of 4 antenna ports, 8 antenna ports, or 16 antenna ports can be enabled at the same time. For example, in a case where the index is 0, it may indicate that the first node enables the three cases of 4 antenna ports, 8 antenna ports and 16 antenna ports at the same time. Correspondingly, the second node reports a measurement report on the antenna ports enabled by the first node according to the index.

In some embodiments, the sixth indication information may be carried in an MAC CE or control information (e.g., DCI). Exemplarily, the MAC CE carrying the sixth indication information may be SP (Semi-Persistent) CSI reporting on PUCCH (Physical Uplink Control Channel) Activation/Deactivation MAC CE.

In some embodiments, referring to Table 21, a structure of the MAC CE carrying the sixth indication information at least includes: a cell identifier, and a number of antenna ports related to the measurement report or an index of the number. In some examples, the structure of the MAC CE further includes a reserved bit (the reserved bit is represented by R in Table 21).

In some examples, the reserved bit may be used to indicate whether an antenna port of the first node is changed. For example, in a case where the reserved bit is "0", it is considered that the antenna port of the first node has not changed.

**Table 21**

| R | Cell Identifier | | | BWP (Bandwidth part) ID (Identifier) | |
|---|---|---|---|---|---|
| Number of antenna ports related to a measurement report; or Index of the number of antenna ports related to measurement report | | S3 | S2 | S1 | S0 |

In some embodiments, the first node may further send seventh indication information; the seventh indication information is used to activate a channel state information resource. Correspondingly, the second node receives the seventh indication information. Further, the second node may activate the channel state information resource according to the seventh indication information.

In some embodiments, the seventh indication information includes a number of antenna ports used for channel state information measurement or an index of the number.

In some embodiments, the number of antenna ports used for channel state information measurement may include a number of all antenna ports, or may only include a number of a portion of antenna ports. In an example, a number of antenna ports used for channel state information measurement is {4, 8, 16}. Further, after the second node receives the number of antenna ports used for channel state information measurement, the second node performs measurement on the 4 antenna ports, the 8 antenna ports, and the 16 antenna ports.

In some embodiments, there is a corresponding relationship between an index of the number of antenna ports used for channel state information measurement and the number of antenna ports used for channel state information measurement. In some examples, the first node may configure the corresponding relationship for the second node through an RRC signaling, or broadcast the corresponding relationship to the second node through a system message. Furthermore, the second node may determine the number of antenna ports used for channel state information measurement according to the corresponding relationship and the index of the number of antenna ports used for channel state information measurement.

In an example, cases of the number of antenna ports used for channel state information measurement configured by the first node through an RRC signaling includes {4, 8, 16}. Further, the first node may indicate to enable the 4 antenna ports, 8 antenna ports, or 16 antenna ports through a 2-bit index. For example, in a case where the index is 01, it indicates that the first node enables 4 antenna ports, in a case where the index is 10, it indicates that the first node enables 8 antenna ports, and in a case where the index is 11, it indicates that the first node enables 16 antenna ports. Correspondingly, the second node performs measurement (e.g., channel state information measurement) on an antenna port enabled by the first node according to the index.

In an example, cases of the number of antenna ports used for channel state information measurement configured by the first node through an RRC signaling includes {4, 8, 16}. Further, the first node may indicate, through a 1-bit index, whether to enable three cases of 4 antenna ports, 8 antenna ports, and 16 antenna ports at the same time. For example, when the index is 0, it may indicate that the first node enables three situations of 4 antenna ports, 8 antenna ports and 16 antenna ports at the same time. Correspondingly, the second node performs measurement (e.g., channel state information measurement) on an antenna port enabled by the first node according to the index.

In some embodiments, the seventh indication information may also include an adjustment number of antenna ports or an index of the adjustment number. Therefore, the second node performs measurement and reporting based on the adjustment number of antenna ports and the number of antenna ports used for channel state information measurement.

In some embodiments, the seventh indication information may be carried in an MAC CE or control information (e.g., DCI). Exemplarily, the MAC CE carrying the seventh indication information may be an SP ZP (Zero Power) CSI-RS resource set Activation/Deactivation MAC CE.

In some embodiments, after the second node receives the seventh indication information, the second node performs measurement on the antenna ports used for channel state information measurement based on the number of antenna ports used for channel state information measurement or the index of the number included in the seventh indication information.

In some embodiments, referring to Table 22, a structure of an MAC CE at least includes: a cell identifier, a number of antenna ports used for channel state information measurement, or an index of the number of antenna ports used for channel state information measurement. In some examples, the structure of the MAC CE further includes a reserved bit (the reserved bit is represented by R in Table 22).

In some examples, the reserved bit may be used to indicate whether an antenna port of the first node is changed. For example, in a case where the reserved bit is "0", it is considered that the antenna port of the first node has not changed.

**Table 22**

| R | Cell Identifier | | BWP ID |
|---|---|---|---|
| Number of antenna ports used for channel state information measurement; or | | SP ZP CSI-RS resource set ID | |
| Index of number of antenna ports used for channel state information measurement | | | |

In some embodiments, the first node may further send a channel state information resource configuration, where the channel state information resource configuration includes at least one antenna port number, and each antenna port number is associated with a measurement result. In some examples, a channel state information resource configuration is associated with a reporting configuration.

In some embodiments, the channel state information resource configuration further includes a maximum number of antenna port number supported by the first node.

In some embodiments, the channel state information resource configuration is broadcast through a system message or configured through an RRC signaling by the first node.

In some embodiments, in a case of receiving the channel state information resource configuration, the second node may configure a channel state information resource for an antenna port according to the channel state information resource configuration.

In some embodiments, in a case of receiving the channel state information resource configuration, the second node may acquire a measurement result of at least one antenna port number according to the channel state information resource configuration.

Exemplarily, the maximum number of antenna port number supported by the first node is 16, and the channel state information resource configuration includes two antenna port numbers of {4, 16}. In a case of receiving the channel state information resource configuration, the second node performs measurement on 4 antenna ports to obtain a measurement result of the 4 ports associated with the 4 antenna ports, and performs measurement on 16 antenna ports to obtain a measurement result of the 16 ports associated with the 16 antenna ports.

In some embodiments, the first node may further send channel state information report configuration, where the channel state information report configuration includes at least one antenna port number, and each antenna port number is associated with a measurement result.

In some embodiments, the channel state information report configuration further includes a maximum number of antenna port number supported by the first node.

In some embodiments, the channel state information report configuration is broadcast through a system message or configured through an RRC signaling by the first node.

In some embodiments, in a case of receiving the channel state information report configuration, the second node may simultaneously report a measurement result associated with each antenna port number to the first node according to the channel state information report configuration.

Exemplarily, the maximum number of antenna port number supported by the first node is 16, and the channel state information resource configuration includes two antenna port numbers {4, 16}. The antenna port number being 4 is associated with a measurement result of 4 ports, and the antenna port number being 16 is associated with a measurement result of 16 ports. In case of receiving the channel state information report configuration, the second node reports the measurement result of the 4 ports and the measurement result of the 16 ports to the first node.

In some embodiments, the first node may send a channel state information resource configuration and a channel state information report configuration. For example, the channel state information resource configuration and the channel state information report configuration are configured through an RRC signaling or broadcast through a system message. In some examples, the channel state information report configuration sent from the first node may be a reporting configuration associated with the channel state information resource sent from the first node.

Correspondingly, after receiving the channel state information resource configuration and the channel state information report configuration, the second node performs measurement and reporting according to the channel state information resource configuration and the channel state information report configuration.

When the base station deactivates an antenna, if the terminal continues to perform measurement according to initially configured antenna ports, the terminal may measure an antenna port with a decreased power. In this way, the terminal may filter a measurement result of the antenna port with the decreased power with a measurement result of a normal antenna port, so a final measurement result may be less affected by the measurement results of the antenna port with the decreased power. If the terminal performs beam management or wireless link detection based on the final measurement result, beam failure or wireless link failure may occur in the terminal. Furthermore, if the terminal performs mobility management based on the final measurement result, a handover failure may occur to the UE.

In this regard, another information transmission method is further provided in the present disclosure, which refers to FIG. 4. The method includes S301 to S302.

In S301, the first node determines measurement result adjustment information.

The measurement result adjustment information is used to adjust a measurement result.

In some embodiments, the measurement result adjustment information includes at least one of:
at least one first offset value, and an adjustment number of antenna ports corresponding to each first offset value;
eighth indication information, where the eighth indication information is used to indicate an offset value used upon adjusting the measurement result;
the eighth indication information and tenth indication information, where the tenth indication information is used to indicate whether the measurement result is too low or too high;
the eighth indication information and ninth indication information of a plurality of antenna ports, where ninth indication information of an antenna port is used to indicate whether a measurement result of the antenna port needs to be adjusted; and
the eighth indication information, the tenth indication information and the ninth indication information of the plurality of antenna ports.

In S302, the first node sends the measurement result adjustment information to the second node; correspondingly, the second node receives the measurement result adjustment information.

In some embodiments, the measurement result adjustment information is broadcast through system information or configured through an RRC signaling by the first node.

In some embodiments, the measurement result adjustment information is carried in an MAC CE or control information (e.g., DCI).

In some embodiments, after the second node receives the measurement result adjustment information, the second node makes corresponding adjustment to a measurement result according to the measurement result adjustment information, to improve the measurement accuracy.

The following is an exemplary illustration for different implementations of the measurement result adjustment information.

Case 3-1: the measurement result adjustment information includes at least one first offset value and an adjustment number of antenna ports corresponding to each first offset value.

In some embodiments, an adjustment number of antenna ports corresponds to a first offset value.

In some embodiments, the first node configures at least one first offset value and an adjustment number of antenna ports corresponding to each first offset value through an RRC signaling, or broadcasts the at least one first offset value and the adjustment number of antenna ports corresponding to each first offset value through system information.

In some embodiments, the second node may determine a first offset value corresponding to an adjustment number of antenna ports according to the adjustment number of antenna ports, and then adjust a measurement result according to the first offset value, thereby improving the accuracy of the measurement.

In an example, the measurement result adjustment information includes two different first offset values: offset1 and offset2, and an antenna adjustment number num1 corresponding to offset1, and an antenna adjustment number num2 corresponding to offset2.

Further, in a case where the measurement result adjustment information is acquired, the second node may adjust a measurement result according to offset1 in a case where an adjustment number of antenna ports is num1; and adjust a measurement result according to offset2 in a case where an adjustment number of antenna ports is num2.

Case 3-2: the measurement result adjustment information includes the eighth indication information.

The eighth indication information is used to indicate an offset value used upon adjusting a measurement result.

In some embodiments, the eighth indication information is the offset value itself used upon adjusting the measurement result, and may also be an index of the offset value.

As an example, in a case where the eighth indication information is an index of an offset value, the first node may configure a corresponding relationship between the index of the offset value and the offset value through an RRC signaling, or broadcast the corresponding relationship between the index of the offset value and the offset value through a system message. For example, an offset value list may be broadcasted, where the offset value list is used to indicate a corresponding relationship between an index of an offset value and the offset value.

In some embodiments, the eighth indication information may be carried in an MAC CE or control information (e.g., DCI).

Exemplarily, referring to Table 23, a structure of an MAC CE carrying the measurement result adjustment information may include: a cell identifier and eighth indication information. In some examples, the structure of the MAC CE further includes a reserved bit (the reserved bit is represented by R in Table 23).

**Table 23**

| R | R | R | Cell Identifier |
|---|---|---|---|
| R | R | R | Eighth indication information |

In an example, still referring to the structure of the MAC CE shown in Table 23, the cell identifier occupies 5 bits and the eighth indication information occupies 5 bits.

Case 3-3: the measurement result adjustment information includes the eighth indication information and the tenth indication information.

The tenth indication information is used to indicate whether a measurement result is too low or too high.

In some embodiments, in a case where the tenth indication information indicates that a measurement result is too high, the adjustment for the measurement result is implemented by, for example, subtracting an offset value used in the adjustment from the measurement result as a final measurement result. In some embodiments, in a case where the tenth indication information indicates that a measurement result is too low, the adjustment for the measurement result is implemented by, for example, adding an offset value used in the adjustment from the measurement result as a final measurement result.

In some embodiments, the eighth indication information is broadcast through a system message or configured through an RRC signaling by the first node, and the eighth indication information may also be carried in an MAC CE or control information (e.g., DCI).

In some embodiments, the tenth indication information is broadcast through a system message or configured through an RRC signaling by the first node, and the tenth indication information may also be carried in an MAC CE or control information (e.g., DCI).

Exemplarily, referring to Table 24, a structure of an MAC CE carrying the measurement result adjustment information may include: a cell identifier, eighth indication information, and tenth indication information. In some examples, the structure of the MAC CE further includes a reserved bit (the reserved bit is represented by R in Table 24).

**Table 24**

| R | R | R | Cell Identifier |
|---|---|---|---|
| R | R | Tenth indication information | Eighth indication information |

In an example, still referring to the structure of the MAC CE shown in Table 24, the cell identifier occupies 5 bits, the eighth indication information occupies 5 bits, and the tenth indication information occupies 1 bit.

Case 3-4: the measurement result adjustment information includes the eighth indication information and the ninth indication information of a plurality of antenna ports.

Ninth indication information of an antenna port is used to indicate whether a measurement result of the antenna port needs to be adjusted.

In an example, in a case where the ninth indication information of the antenna port takes a value of "1", a measurement result of the antenna port needs to be adjusted; in a case where the ninth indication information of the antenna port takes a value of "0", the measurement result of the antenna port does not need to be adjusted. It should be understood that, the ninth indication information further includes other possible values, so that the ninth indication information may indicate two different cases, which will not be limited in the embodiments of the present disclosure.

In some embodiments, in a case where the ninth indication information of an antenna port indicates that a measurement result needs to be adjusted, the measurement result of the antenna port is adjusted according to an offset value indicated by the eighth indication information.

In some embodiments, the eighth indication information is the offset value itself used upon adjusting the measurement result, and may also be an index of the offset value. In a case where the eighth indication information is an index of an offset value, the first node may configure a corresponding relationship between the index of the offset value and the offset value through an RRC signaling, or broadcast the corresponding relationship between the index of the offset value and the offset value through a system message. For example, an offset value list may be broadcasted, where the offset value list is used to indicate a corresponding relationship between an index of an offset value and the offset value, so that in a case where the second node receives the index of the offset value, the second node determines the offset value to be used for adjustment according to the corresponding relationship.

In some embodiments, the eighth indication information may be broadcast through a system message or configured through an RRC signaling by the first node, and may also be carried in an MAC CE or control information (e.g., DCI).

In some embodiments, the ninth indication information of the plurality of antenna ports may be broadcast through a system message or configured through an RRC signaling by the first node, and may also be carried in an MAC CE or control information (e.g., DCI).

Exemplarily, a structure of an MAC CE carrying the measurement result adjustment information may include: a cell identifier, eighth indication information, and ninth indication information of a plurality of antenna ports. In some examples, the structure of the MAC CE further includes a reserved bit.

In an example, referring to Table 25, the structure of the MAC CE includes: a cell identifier, eighth indication information, ninth indication information of 32 antenna ports, and reserved bits. A reserved bit is represented by R in Table 25, and port1 to port32 in Table 25 are used to represent the ninth indication information of the 32 antenna ports.

**Table 25**

| R | Eighth indication information | | Cell Identifier | | | | |
|---|---|---|---|---|---|---|---|
| port1 | port2 | port3 | port4 | port5 | port6 | port7 | port8 |
| port9 | port10 | port11 | port12 | port13 | port14 | port15 | port16 |
| port17 | port18 | port19 | port20 | port21 | port22 | port23 | port24 |
| port25 | port26 | port27 | port28 | port29 | port30 | port31 | port32 |

In an example, still referring to the structure of the MAC CE shown in Table 25, the ninth indication information of 32 antenna ports occupies 32 bits. Ninth indication information of each antenna port occupies 1 bit; the cell identifier occupies 5 bits, and the eighth indication information occupies 5 bits.

It should be noted that solutions shown in the above cases 3-1 to 3-4 are merely examples, and implementations of the measurement result adjustment information are not limited in the embodiments of the present disclosure.

In some embodiments, the first node may broadcast a plurality of sets of communication configuration parameters; correspondingly, the second node receives the plurality of sets of communication configuration parameters. Each set of communication configuration parameters corresponds to a quantity of antenna ports to be activated of the first node.

Furthermore, the second node may determine corresponding communication configuration parameters for measurement according to the quantity of antenna ports to be activated of the first node, thereby improving the accuracy of the measurement result.

In some embodiments, a set of communication configuration parameters includes at least one of: a measurement or evaluation period for antenna port adjustment, a radio link failure (RLF) timer (e.g., RLF timer t310) for antenna port adjustment, an RLF counter (e.g., RLF counter n310), a beam detection timer, an RLF failure threshold, a beam failure threshold, a switching threshold, or a measurement report triggering threshold.

In some embodiments, the second node uses a first communication configuration parameter to perform measurement and reporting on an antenna port of the first node. Further, in a case where at least a portion of the antenna ports of the first node are deactivated or power of the at least a portion of the antenna ports of the first node is decreased, the second node uses a second communication configuration parameter to perform measurement and reporting on an antenna port of the first node.

In some examples, compared to using the first communication configuration parameter to perform measurement and reporting, upon using the second communication configuration parameter to perform measurement and reporting, the second node satisfies at least one of:
a measurement opportunity for beam detection being increased;
a measurement opportunity for channel state information resources used for radio link detection being increased;
a beam detection failure threshold being increased;
a threshold for radio link detection failure being increased; and
a measurement or evaluation period is increased.

In an example, the first node configures a third communication configuration parameter and a fourth communication configuration parameter through an RRC signaling or broadcasts the third communication configuration parameter and the fourth communication configuration parameter through a system message. The third communication configuration parameter corresponds to a quantity of antenna ports to be activated initially configured by the first node. The fourth communication parameter corresponds to a quantity of antenna ports to be activated by an antenna port adjustment of the first node.

Further, in a case where the second node is notified that an antenna port of the first node changes, the second node uses the fourth communication configuration parameter to perform measurement. Alternatively, in a case where the second node is notified that a quantity of antenna ports to be activated of the first node is the same as a quantity of antenna ports to be activated as initially configured, the second node uses the third communication configuration parameter to perform measurement.

In some embodiments, the above-mentioned measurement result includes, but is not limited to: L1-RSRP (Layer 1-Reference Signal Received Power)/RSRQ (Reference Signal Received Quality), and L3-RSRP/RSRQ.

In some embodiments, the second node may also send capability information of the second node to the first node; correspondingly, the first node receives the capability information of the second node.

The capability information of the second node is used to indicate at least one of:
whether the second node supports that an antenna port changes dynamically;
whether the second node supports that an antenna port is deactivated;
whether the second node supports that an antenna port power is decreased;
whether the second node supports to be notified that an antenna port changes;
whether the second node supports to receive an MAC CE or control information for carrying the antenna port adjustment information; or
whether the second node supports to update a measurement process according to a number of antenna ports.

Based on this, the first node may learn the capability information of the second node, and thus determine, according to the capability information of the second node, whether to notify the second node that an antenna port changes, or send an MAC CE or control information carrying the antenna port adjustment information, etc.

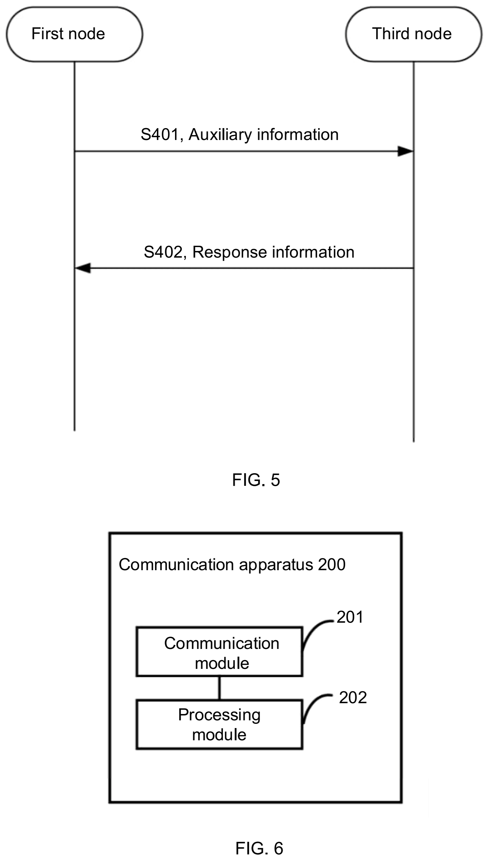

In addition, considering that in a case where the first node adjusts a number of antennas or antenna ports used by the first node itself, other nodes (such as a third node) may be affected, yet another information transmission method is further provided in the present disclosure. Referring to FIG. 5, the method includes S401 to S402.

In S401, a first node sends an auxiliary message to a third node; correspondingly, the third node receives the auxiliary information.

The auxiliary message includes antenna port-related information of the first node.

In some embodiments, the third node may be a base station or a terminal, which is not limited in the present disclosure.

In some embodiments, the third node is a node adjacent to the first node.

In some embodiments, if any one of the following cases 4-1 and 4-2 is satisfied, the first node sends the auxiliary information to the third node.

Case 4-1: the first node adjusts a number of antenna ports used by the first node itself.

Case 4-2: the first node activates or deactivates a portion or all of antennas used by the first node itself.

In some embodiments, the antenna port-related information includes, but is not limited to: antenna port adjustment information, time configuration information related to the antenna port adjustment information, and measurement result adjustment information. It should be understood that the antenna port-related information may further include other possible relevant information, such as the eighth indication information, etc., which may refer to the relevant information listed above, and will not be repeated herein.

In S402, the third node sends response information to the first node; correspondingly, the first node receives the response information of the third node.

In some embodiments, the response information includes an indication for a successful or failed reception.

In some embodiments, the response information includes antenna port-related information of the third node. Based on this, interaction of relevant information of antenna ports of adjacent nodes may be implemented.

In the technical solutions provided in the embodiments of the present disclosure, an adjacent node of the first node may be enabled to acquire antenna port-related information of the first node, and then make corresponding adjustment to reduce communication interference between adjacent nodes.

Considering that a node is in an energy-saving state, if discontinuous reception (DRX)/discontinuous transmission (DTX) is activated, a service quality for a user may be affected. For example, for a fourth node, if a source cell of the fourth node enables a cell-level DTX/DRX, discontinuous transmission or reception delays transmission and reduces a user rate of the fourth node.

In this regard, a switching method is provided in the embodiments of the present disclosure, thus the fourth node may switch from a source cell to a target cell with better service quality. Exemplarily, the switching method includes: in a case where a first switching condition is met, the fourth node switches from a source cell to a target cell.

The source cell accessed by the fourth node enables DRX/DTX.

In some embodiments, the first switching condition includes: an inactive period of DRX/DTX cycles of the source cell being greater than a first threshold. It should be understood that, in a case where the inactive period of DRX/DTX cycles of the source cell is greater than the first threshold, the fourth node has higher restrictions on sending and receiving, and may enter a longer deactivated period, making it difficult to meet a delay budget requirement. Therefore, the fourth node may switch to the target cell to improve the service quality.

In some embodiments, the first switching condition includes: a ratio of the inactive period of DRX/DTX cycles of the source cell to the DRX/DTX cycle of the source cell being greater than a third threshold. It should be understood that, in a case where the ratio of the inactive period of DRX/DTX cycles of the source cell to the DRX/DTX cycle of the source cell is greater than the third threshold, a probability of the fourth node being in the inactive period is higher, and therefore a probability of receiving or sending data is lower, making it difficult to meet a delay budget requirement. Therefore, the fourth node may switch to the target cell to improve the service quality.

In some embodiments, the first switching condition includes: a ratio of an active period of DRX/DTX cycles of the source cell to the DRX/DTX cycle of the source cell being less than a fourth threshold. It should be understood that in a case where the ratio of the active period of DRX/DTX cycles of the source cell to the DRX/DTX cycle of the source cell is less than the fourth threshold, a probability of the fourth node being in the active period is lower, and therefore the probability of receiving or sending data is lower, making it difficult to meet the delay budget requirement. Therefore, the fourth node may switch to the target cell to improve the service quality.

In some embodiments, the first switching condition includes: a current time being later than a start time when DRX/DTX of the source cell takes effect; or the current time being later than a start time when a DRX/DTX inactive period of the source cell takes effect; or the current time being later than the start time when DRX/DTX of the source cell takes effect offset by a second time offset value; or the current time being later than the start time when the DRX/DTX inactive period of the source cell takes effect offset by the second time offset value. Based on this, the fourth node may switch to the target cell before the inactive period of the source cell begins, thereby ensuring that the fourth node continues to perform data transmission without being affected by the inactive period of the source cell, thereby improving the service quality.

In some embodiments, the first switching condition includes: the source cell indicating the fourth node to switch from the source cell to the target cell. Exemplarily, the first switching condition may include that the source cell sends a first instruction to the fourth node through an MAC CE or control information (e.g., DCI), where the first instruction is used to indicate the fourth node to switch from the source cell to the target cell. In an example, the first instruction further includes a flag bit for executing switching.

In some embodiments, the first switching condition includes: the current time reaching a preset switching initiation time. The switching initiation time may be indicated by the source cell through an MAC CE or control information (e.g., DCI).

As an example, the source cell may send time information for configuring the switching initiation time through the MAC CE or control information, and the time information may include at least one of: a start time, a time offset value, and a duration.

In an example, the switching initiation time may be the time when the MAC CE or DCI carrying the time information takes effect.

In an example, the switching initiation time may be a time obtained by adding the time when the MAC CE or DCI carrying the time information takes effect and a time offset value.

In an example, the switching initiation time may be a start time included in the time information.

In some embodiments, the target cell also enables DRX/DTX, and the first switching condition includes: an inactive period of DRX/DTX cycles of the target cell being less than a second threshold. It should be understood that, in a case where the inactive period of DRX/DTX cycles of the target cell is less than the second threshold, the fourth node has less restrictions on sending and receiving in the target cell, and the inactive period is shorter, so data transmission may be performed for more time. Therefore, the fourth node may switch to the target cell to improve the service quality.

In some embodiments, the target cell also enables DRX/DTX, and the first switching condition includes: a ratio of the inactive period of DRX/DTX cycles of the target cell to the DRX/DTX cycle of the target cell being less than a fifth threshold. It should be understood that in a case where the ratio of the inactive period of DRX/DTX cycles of the target cell to the DRX/DTX cycle of the target cell is less than the fifth threshold, when the fourth node accesses the target cell, the probability of being in an inactive period is relatively low, and therefore a probability of receiving or sending data is higher, making it easier to meet the delay budget requirement. Therefore, the fourth node may switch to the target cell to improve the service quality.

In some embodiments, the target cell also enables DRX/DTX, and the first switching condition includes: a ratio of an active period of DRX/DTX cycles of the target cell to the DRX/DTX cycle of the target cell being greater than a sixth threshold. It should be understood that in a case where the ratio of the active period of DRX/DTX cycles of the target cell to the DRX/DTX cycle of the target cell is greater than the sixth threshold, when the fourth node accesses the target cell, there is a high probability of being in an active period, and therefore the probability of receiving or sending data is higher, making it easier to meet the delay budget requirement. Therefore, the fourth node may switch to the target cell to improve the service quality.

It should be noted that the above-mentioned first switching conditions may be combined. For example, in a case where the target cell satisfies one or more of the above-mentioned first switching conditions, the fourth node switches from the source cell to the target cell.

In some embodiments, the source cell may further configure the DTX/DRX parameters of the target cell through an RRC signaling or broadcast the DTX/DRX parameters of the target cell according to a system message. Based on this, it is convenient for the fourth node to access the target cell according to the DTX/DRX parameters of the target cell.

In some embodiments, the above-mentioned first threshold to sixth threshold may be determined based on a transmission quantity and a delay budget of a protocol data unit (PDU).

Similarly, in a case where a second switching condition is met, the fourth node switches from the target cell to the source cell.

The second switching condition includes at least one of:
the inactive period of DRX/DTX cycles of the source cell being less than the seventh threshold;
a ratio of the inactive period of DRX/DTX cycles of the source cell to the DRX/DTX cycle of the source cell being less than an eighth threshold;
a ratio of the active period of DRX/DTX cycles of the source cell to the DRX/DTX cycle of the source cell being greater than a ninth threshold;
the current time being later than a preset switching initiation time plus a switching duration; where the switching initiation time may refer to the description above and are not repeated herein;
the inactive period of DRX/DTX cycles of the target cell being greater than a tenth threshold;
a ratio of the inactive period of DRX/DTX cycles of the target cell to the DRX/DTX cycle of the target cell being greater than an eleventh threshold; and
a ratio of the active period of DRX/DTX cycles of the target cell to the DRX/DTX cycle of the target cell being less than a twelfth threshold.

In some embodiments, the seventh threshold to twelfth threshold may be determined based on the transmission quantity and the delay budget of the protocol data unit (PDU).

The solutions provided in the embodiments of the present disclosure are introduced above from the perspective of methods. A communication apparatus is further shown below, which is configured to perform the information transmission method in any of the above-mentioned embodiments and possible implementations thereof. It can be understood that, in order to implement the above functions, the communication apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above method embodiments in the present disclosure. For example, each functional module may be divided corresponding to each function, or two or more functions may be integrated into one functional module. The integrated module may implemented in the form of hardware, or may be implemented in the form of software. It should be noted that, the division for the modules in the embodiments of the present disclosure is illustrated, which is only a logical functional division, and there may be other division manners in actual implementation. It should be understood that, the above-mentioned module may also referred to as a unit. The following is illustrated by taking an example of a division of each functional module corresponding to each function.

FIG. 6 is a structural schematic diagram of a communication apparatus according to some embodiments. As shown in FIG. 6, the communication apparatus 200 includes: a communication module 201 and a processing module 202.

In some embodiments, the processing module 202 is configured to determine antenna port adjustment information of a first node.

In some embodiments, the communication module 201 is configured to send the antenna port adjustment information to a second node.

In some embodiments, the processing module 202 is further configured to determine time configuration information related to the antenna port adjustment information.

In some embodiments, the communication module 201 is further configured to send the time configuration information to the second node.

In some embodiments, the communication module 201 is further configured to send fourth indication information to the second node, where the fourth indication information is used to indicate to enable the antenna port adjustment information.

In some embodiments, the communication module 201 is further configured to send fifth indication information to the second node, where the fifth indication information is used to disable the antenna port adjustment information.

In some embodiments, the communication module 201 is further configured to send sixth indication information, where the sixth indication information is used to activate reporting for a measurement report, and the sixth indication information includes a number of antenna ports related to the measurement report or an index of the number.

In some embodiments, the communication module 201 is further configured to send seventh indication information, where the seventh indication information is used to activate a channel state information resource, and the seventh indication information includes a number of antenna ports used for channel state information measurement or an index of the number.

In some embodiments, the communication module 201 is further configured to send a channel state information resource configuration, where the channel state information resource configuration includes at least one antenna port number, and each antenna port number is associated with a measurement result.

In some embodiments, the communication module 201 is further configured to send a channel state information report configuration, where the channel state information report configuration includes at least one antenna port number, and each antenna port number is associated with a measurement result.

In some embodiments, the processing module 202 is further configured to determine measurement result adjustment information, where the measurement result adjustment information is used to adjust a measurement result.

In some embodiments, the communication module 201 is further configured to send measurement result adjustment information to the second node.

In some embodiments, the communication module 201 is further used to broadcast a plurality of sets of communication configuration parameters, where each set of communication configuration parameters correspond to a quantity of antenna ports to be activated of the first node.

In some embodiments, the communication module 201 is further configured to receive capability information of the second node.

In some embodiments, the communication module 201 is further configured to send an auxiliary message to a third node in response to that the first node adjusts a number of antenna ports used by the first node itself, where the auxiliary message includes antenna port-related information of the first node.

In some embodiments, the communication module 201 is further configured to receive a response message sent from the third node, where the response message includes antenna port-related information of the third node.

The above-mentioned antenna port adjustment information, time configuration information related to the antenna port adjustment information, the fourth indication information, the fifth indication information, the sixth indication information, the seventh indication information, the channel state information resource configuration, the channel state information report configuration, the measurement result adjustment information, the communication configuration parameters, the capability information of the second node, the auxiliary information and the response information may refer to the description in the method embodiments above, which may not be repeated herein.

In addition, another communication apparatus is further provided in the embodiments of the present disclosure, which still refers to FIG. 6. The communication apparatus 200 includes: the communication module 201 and the processing module 202.

In some embodiments, the communication module 201 is configured to receive antenna port adjustment information.

In some embodiments, the communication module 201 is further configured to receive time configuration information related to the antenna port adjustment information.

In some embodiments, the communication module 201 is further configured to receive fifth indication information, where the fifth indication information is used to disable the antenna port adjustment information.

In some embodiments, the communication module 201 is further configured to receive sixth indication information, where the sixth indication information is used to activate reporting for a measurement report, and the sixth indication information includes a number of antenna ports related to the measurement report or an index of the number.

In some embodiments, the communication module 201 is further configured to receive seventh indication information, where the seventh indication information is used to activate a channel state information resource, and the seventh indication information includes a number of antenna ports used for channel state information measurement or an index of the number.

In some embodiments, the communication module 201 is further configured to receive a channel state information resource configuration, where the channel state information resource configuration includes at least one antenna port number, and each antenna port number is associated with a measurement result.

In some embodiments, the communication module 201 is further configured to receive a channel state information report configuration, where the channel state information report configuration includes at least one antenna port number, and each antenna port number is associated with a measurement result.

In some embodiments, the communication module 201 is further configured to receive measurement result adjustment information, where the measurement result adjustment information is used to adjust a measurement result.

In some embodiments, the communication module 201 is further configured to receive a plurality of sets of communication configuration parameters, where each set of communication configuration parameters correspond to a quantity of antenna ports to be activated of the first node.

In some embodiments, the communication module 201 is further configured to send its own capability information. For example, in a case where the communication apparatus 200 is a second node, capability information of the second node is sent.

In some embodiments, the processing module 202 is configured to perform corresponding operations according to received information.

The above-mentioned antenna port adjustment information, time configuration information related to the antenna port adjustment information, the fourth indication information, the fifth indication information, the sixth indication information, the seventh indication information, the channel state information resource configuration, the channel state information report configuration, the measurement result adjustment information, the communication configuration parameters, the capability information may refer to the description in the method embodiments above, which may not be repeated herein.

In addition, yet another communication apparatus is further provided in the embodiments of the present disclosure, which still refers to FIG. 6. The communication apparatus 200 includes: the communication module 201 and the processing module 202.

In some embodiments, the communication module 201 is configured to receive an auxiliary message sent from a first node in response to that the first node adjusts a number of antenna ports used by the first node itself, where the auxiliary message includes antenna port-related information of the first node.

In some embodiments, the communication module 201 is further configured to send response information, and the response message includes relevant information of its own antenna port. For example, in the case where the communication apparatus is a third node or a functional module of the third node, the response message includes antenna port-related information of the third node.

In some embodiments, the processing module 202 is configured to determine antenna port-related information.

The contents of the auxiliary information and the response information may refer to the description in the method embodiments above, which may not be repeated herein.

In addition, yet another communication apparatus is further provided in the embodiments of the present disclosure, which still refers to FIG. 6. The communication apparatus 200 includes: the communication module 201 and the processing module 202.

In some embodiments, the processing module 202 is configured to switch from a source cell to a target cell in response to that a first switching condition is met.

In some embodiments, the processing module 202 is further configured to switch from the target cell to the source cell in response to that a second switching condition is met.

The contents of the first switching condition and the second switching condition may also refer to the description in the method embodiments above, which are not repeated herein.

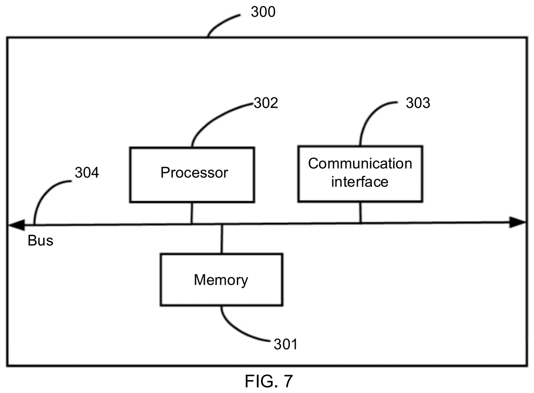

In a case where the functions of the above-mentioned integrated modules are implemented in the form of hardware, a structure of a communication apparatus is further provided in the embodiments of the present disclosure, and the communication apparatus is configured to perform the information transmission method and/or switching method provided in the embodiments of the present disclosure. As shown in FIG. 7, the communication apparatus 300 includes a processor 302. In some examples, the communication apparatus may further include at least one of a communication interface 303, a bus 304, and a memory 301.

The processor 302 may implement or perform various exemplary logical blocks, modules and circuits described in combination with the embodiments of the present disclosure. The processor 302 may be a central processor, a general-purpose processor, a digital signal processor, an application specific integrated circuit, a field programmable gate array, or other programmable logic component, a transistor logic component, a hardware assembly, or any combination thereof. The processor 302 may implement or execute various illustrative logical blocks, modules and circuits described in conjunction with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is configured to connect to other devices through a communication network. The communication network may be an Ethernet, a wireless access network, a wireless local area network (WLAN), or the like.

The memory 301 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic disk storage devices, or any other medium that can be used to carry or store desired program codes with instructions or data and can be accessed by a computer, which is not limited thereto.

In an implementation, the memory 301 may be integrated with the processor 302.

As another implementation, the memory 301 may exist independently from the processor 302, and the memory 301 may be connected to the processor 302 through the bus 304, and is configured to store instructions or program codes (e.g., computer program instructions, etc.) that are executable for the processor 302. When the processor 302 invokes and executes instructions or program codes stored in the memory 301, the processor 302 may implement the information transmission method and/or switching method provided in the embodiments of the present disclosure.

The bus 304 may be an extended industry standard architecture (EISA) bus, or the like. The bus 304 may be classified as an address bus, a data bus, a control bus, or the like. For ease of representation, only one bold line is used in FIG. 7 for representing the bus 304, but it does not mean that there is only one bus or one type of bus.

A computer-readable storage medium (e.g., a non-transitory computer-readable storage medium) is provided in some embodiments of the present disclosure, the computer-readable storage medium has stored computer program instructions, and the computer program instructions, upon being executed on a computer (e.g., the above-mentioned communication apparatus, the communication apparatus, base station, the first terminal, the second terminal and the processors thereof), enable the computer to perform the information transmission method and/or switching method as described in any one of the above-mentioned embodiments. It should be understood that, a form of the computer is not limited in the embodiments of the present disclosure.

In some examples, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other medium capable of storing, containing, and/or carrying instructions and/or data.

A computer program product including instructions is provided in some embodiments of the present disclosure, in response to that the computer program product is run on a computer, the computer is enabled to perform the information transmission method and/or switching method as described in any one of the above-mentioned embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. An information transmission method, wherein the method is applied to a first node, and the method comprises:
determining antenna port adjustment information of the first node; and
sending the antenna port adjustment information to a second node.

2. The method according to claim 1, wherein the antenna port adjustment information comprises a quantity of antenna ports to be activated or an index of the quantity of antenna ports to be activated.

3. The method according to claim 1, wherein the antenna port adjustment information comprises an adjustment number of antenna ports and first indication information; or the antenna port adjustment information comprises an index of the adjustment number and the first indication information;
wherein the first indication information is used to indicate whether the adjustment number represents an increased quantity or a decreased quantity.

4. The method according to claim 1, wherein the antenna port adjustment information comprises second indication information of a plurality of antenna ports, second indication information of an antenna port is used to indicate a state of the antenna port, and the state of the antenna port comprises a normal state or a deactivated state.

5. The method according to claim 1, wherein the antenna port adjustment information comprises third indication information and second indication information of a plurality of antenna ports, and the third indication information and second indication information of an antenna port are used to jointly indicate a state of an antenna port, and the state of the antenna port comprises a normal state, a power adjustment state or a deactivated state.

6. The method according to claim 5, wherein the third indication information is further used to indicate a power reduction degree of an antenna port in the power adjustment state.

7. The method according to any one of claims 2 to 6, wherein the antenna port adjustment information further comprises a cell identifier.

8. The method according to any one of claims 1 to 6, wherein the antenna port adjustment information is carried in control information or a media access control control element (MAC CE).

9. The method according to claim 1, further comprising:
determining time configuration information related to the antenna port adjustment information; and
sending the time configuration information to the second node.

10. The method according to claim 9, wherein the time configuration information comprises at least one of:
a duration, or an index of the duration;
a start time, or an index of the start time;
a first time offset value for determining the start time, or an index of the first time offset value;
a period, or an index of the period; or
a time information index value, wherein the time information index value corresponds to a set of time parameters, and the set of time parameters comprises at least one of the duration, the start time, the first time offset value, and the period.

11. The method according to claim 10, wherein the time configuration information further comprises a cell identifier.

12. The method according to claim 1, further comprising:
sending fourth indication information to the second node, wherein the fourth indication information is used to indicate to enable the antenna port adjustment information.

13. The method according to claim 1, further comprising:
sending fifth indication information to the second node, wherein the fifth indication information is used to disable the antenna port adjustment information.

14. The method according to claim 1, further comprising:
sending sixth indication information, wherein the sixth indication information is used to activate reporting for a measurement report, and the sixth indication information comprises a number of antenna ports related to the measurement report or an index of the number.

15. The method according to claim 1, further comprising:
sending seventh indication information, wherein the seventh indication information is used to activate a channel state information resource, and the seventh indication information comprises a number of antenna ports used for channel state information measurement or an index of the number.

16. The method according to claim 1, further comprising:
sending a channel state information resource configuration, wherein the channel state information resource configuration comprises at least one antenna port number, and each antenna port number is associated with a measurement result.

17. The method according to claim 1, further comprising:
sending a channel state information report configuration, wherein the channel state information report configuration comprises at least one antenna port number, and each antenna port number is associated with a measurement result.

18. The method according to claim 1, further comprising:
determining measurement result adjustment information, wherein the measurement result adjustment information is used to adjust a measurement result; and
sending the measurement result adjustment information to the second node.

19. The method according to claim 18, wherein the measurement result adjustment information comprises at least one first offset value and an adjustment number of antenna ports corresponding to each first offset value, and the first offset value is used to adjust the measurement result.

20. The method according to claim 18, wherein the measurement result adjustment information comprises a first offset value or an index of the first offset value.

21. The method according to claim 18, wherein the measurement result adjustment information comprises eighth indication information and ninth indication information of a plurality of antenna ports, the ninth indication information of an antenna port is used to indicate whether a measurement result of the antenna port needs to be adjusted, and the eighth indication information is used to indicate an offset value used for adjusting the measurement result.

22. The method according to claim 1, further comprising:
broadcasting a plurality of sets of communication configuration parameters, wherein each set of communication configuration parameters corresponds to a quantity of antenna ports to be activated of the first node.

23. The method according to claim 22, wherein a set of communication configuration parameters comprises at least one of: a measurement or evaluation period for antenna port adjustment, a radio link failure (RLF) timer for antenna port adjustment, an RLF counter, a beam detection timer, an RLF failure threshold, a beam failure threshold, a switching threshold, or a measurement report triggering threshold.

24. The method according to claim 1, further comprising:
receiving capability information of the second node, wherein the capability information of the second node is used to indicate at least one of:
whether the second node supports that an antenna port changes dynamically;
whether the second node supports that an antenna port is deactivated;
whether the second node supports that an antenna port power is decreased;
whether the second node supports to be notified that an antenna port changes;
whether the second node supports to receive an MAC CE or control information for carrying the antenna port adjustment information; or
whether the second node supports to update a measurement process according to a number of antenna ports.

25. The method according to claim 1, further comprising:
in response to that the first node adjusts a number of antenna ports used by the first node itself, sending an auxiliary message to a third node, wherein the auxiliary message comprises antenna port-related information of the first node.

26. The method according to claim 25, further comprising:
receiving a response message sent from the third node, wherein the response message comprises antenna port-related information of the third node.

27. An information transmission method, wherein the method is applied to a second node, and the method comprises: receiving antenna port adjustment information sent from a first node.

28. A switching method, wherein the method is applied to a fourth node, and a source cell accessed by the fourth node enables discontinuous reception/discontinuous transmission (DRX/DTX), and the method comprises:
in response to that a first switching condition is met, switching, by the fourth node, from the source cell to a target cell.

29. The method according to claim 28, wherein the first switching condition comprises at least one of:
an inactive period of DRX/DTX cycles of the source cell being greater than a first threshold;
an inactive period of DRX/DTX cycles of the target cell being less than a second threshold;
a ratio of the inactive period of DRX/DTX cycles of the source cell to a DRX/DTX cycle of the source cell being greater than a third threshold;
a ratio of an active period of DRX/DTX cycles of the source cell to the DRX/DTX cycle of the source cell being less than a fourth threshold;
a ratio of the inactive period of DRX/DTX cycles of the target cell to a DRX/DTX cycle of the target cell being less than a fifth threshold;
a ratio of an active period of DRX/DTX cycles of the target cell to the DRX/DTX cycle of the target cell being greater than a sixth threshold;
a current time being later than a start time when DRX/DTX of the source cell takes effect;
the current time being later than a start time when a DRX/DTX inactive period of the source cell takes effect;
the current time being later than the start time when DRX/DTX of the source cell takes effect offset by a second time offset value;
the current time being later than the start time when the DRX/DTX inactive period of the source cell takes effect offset by the second time offset value;
the source cell indicating the fourth node to switch from the source cell to the target cell; and
the current time reaches a preset switching initiation time.

30. A communication apparatus, comprising: a processor and a memory for storing instructions executable for the processor;
wherein the processor is configured to, upon executing the instructions, enable the communication apparatus to perform the method according to any one of claims 1 to 29.

31. A computer storage medium, wherein the computer-readable storage medium stores computer program instructions, wherein the computer program instructions, upon being run on a computer, enable the computer to execute the method according to any one of claims 1 to 29.
